# NEW EUROPEAN PATENT SPECIFICATION

(11) **EP 3 784 064 B2**
(45) Date of publication and mention of the opposition decision: **22.07.2026**
(45) Mention of the grant of the patent: 02.06.2021
(21) Application number: 20712501.4
(22) Date of filing: 16.03.2020
(51) Int. Cl.: A24B 13/00, A24B 15/16, A24B 15/38, D04H 1/425, D04H 1/58

(54) **A PACKAGING MATERIAL AND AN ORAL POUCHED NICOTINE PRODUCT**
VERPACKUNGSMATERIAL UND ORALES NIKOTINBEUTELPRODUKT
MATÉRIAU D'EMBALLAGE ET PRODUIT À BASE DE NICOTINE EN SACHET DESTINÉ À ÊTRE ADMINISTRÉ PAR VOIE ORALE

(30) Priority: 18.03.2019 SE 1950331
(43) Date of publication of application: 03.03.2021
(73) Proprietor: Swedish Match North Europe AB, 118 85 Stockholm (SE)
(72) Inventor: BODIN, Cristian, 443 50 Lerum (SE)
(74) Representative: Valea AB
(86) International application number: PCT/EP2020/057022
(87) International publication number: WO 2020/187812

(56) References cited:
- EP-A1- 1 039 024
- EP-A1- 2 692 254
- EP-A1- 3 192 380
- WO-A1-2016/040754
- WO-A1-2016/083463
- WO-A1-2017/093488
- WO-A1-2020/169514
- US-A1- 2014 242 309

## Description

### TECHNICAL FIELD

The present invention relates to a packaging material for use in an oral pouched nicotine product and to an oral pouched nicotine product.

### BACKGROUND

Smokeless tobacco products for oral use are made from tobacco leaves, such as lamina and stem of the tobacco leaf. The material from roots and stalks are normally not utilized for production of smokeless tobacco compositions for oral use.

Smokeless tobacco for oral use includes chewing tobacco, dry snuff and moist (wet) snuff. Generally, dry snuff has moisture content of less than 10 wt% and moist snuff has a moisture content of above 40 wt%. Semi-dry products having between 10% to 40 wt% moisture content are also available.

There are two types of moist snuff, the American type and the Scandinavian type. The Scandinavian type of moist snuff is also called snus. American-type moist snuff is commonly produced through a fermentation process of moisturized ground or cut tobacco. Scandinavian-type moist snuff (snus) is commonly produced by using a heat-treatment process (pasteurization) instead of fermentation. Both processes reduce the bitterness of unprocessed tobacco and also soften the texture of the tobacco being the primary reasons why not unprocessed tobacco is used for the production of moist snuff. The heat-treatment is also carried out in order to degrade, destroy or denature at least a portion of the microorganisms within the tobacco preparation.

Both the American-type and the Scandinavian-type of moist snuff for oral use are available in loose form or portion-packed in a saliva-permeable, porous wrapper material forming a pouch. Pouched moist snuff, including snus, is typically used by the consumer by placing the pouch between the upper or lower gum and the lip and retaining it there for a limited period of time. The pouch material holds the tobacco in place while allowing saliva to pass into the tobacco and allowing flavours and nicotine to diffuse from the tobacco material into the consumer's mouth.

The pouch material used in oral pouched snuff products, also called the packaging material, is a saliva-permeable nonwoven. Nonwovens are fabrics that are neither woven nor knitted.

According to known technology, several different methods may be used to bond together the fibres in the web, also called web consolidation. The different types of bonding methods may be classified as mechanical bonding, e.g. needle punching, stitch bonding, hydro-entanglement, as chemical bonding, e.g. saturation bonding, spray bonding, foam bonding, powder bonding, print bonding and as thermal bonding, e.g. point-bonding in a hot calendar. More than one bonding method may be used to consolidate the nonwoven. In chemical bonding, a binder, also called a bonding agent or an adhesive, is combined with the fibres. This type of nonwoven is generally called chemically bonded or adhesive bonded nonwoven.

Pouched smokeless tobacco products for oral use may be post-moisturized after pouch formation or not post-moisturized after pouch formation. Pouched smokeless tobacco products for oral use which are not post-moisturized is herein referred to as non-post-moisturized. Post-moisturized pouched products may be produced by spraying water on the pouched smokeless tobacco product before packaging the pouched products in cans. The moisture content of the final oral pouched smokeless tobacco product comprising moist or semi-dry snuff is normally within the range of from 25 to 55% w/w based on the weight of the pouched product (i.e. the total weight of moist snuff and pouch material).

There are also smokeless non-tobacco products for oral use, which do not contain any tobacco material. Instead, the oral smokeless non-tobacco product comprises non-tobacco plant material and/or a filling material.

Addition of a small amount of tobacco to the oral smokeless non-tobacco product provides an oral smokeless low tobacco snuff product. Thus, in addition to a small amount of tobacco the oral smokeless snuff product comprises non-tobacco plant material as described herein and/or a filling material as described herein.

Examples of nicotine-free moist non-tobacco snuff products for oral use and the manufacture thereof are provided in WO 2007/126361 and WO 2008/133563. This type of non-tobacco snuff product for oral use may be provided in loose form or portion-packed in a saliva-permeable, porous wrapper material forming a pouch.

Patent document EP 3 192 380 A1 relates to an oral pouched product, such as an oral pouched smokeless tobacco product, comprising a filling material and a pouch enclosing the filling material, the pouch comprising a dry-laid nonwoven, the dry-laid nonwoven comprising staple fibres of regenerated cellulose and a binder, wherein the staple fibres of regenerated cellulose comprises lyocell staple fibres and the dry-laid nonwoven has a basis weight of at most 25 g/m².

For nicotine-containing oral smokeless non-tobacco products, or oral smokeless low tobacco snuff products which contain nicotine in addition to the nicotine provided by the tobacco in said product, the nicotine may be synthetic nicotine and/or nicotine extract from tobacco plants. Further, the nicotine may be present in the form of nicotine base and/or a nicotine salt.

The term snuff product as used herein relates to the usage of the product. The product is configured to fit comfortably and discreetly in a user's mouth between the upper and lower gum and the lip. Hence, a snuff product, as the term is used herein, may be a product with tobacco or without tobacco.

The oral smokeless non-tobacco product or the oral smokeless low tobacco snuff product may be dry, semi-dry or moist. Generally, dry oral smokeless non-tobacco products or dry oral smokeless low tobacco snuff products have a moisture content of less than 10 wt% and moist oral smokeless non-tobacco products or moist oral smokeless low tobacco snuff products have a moisture content of above 40 wt%. Semi-dry oral smokeless non-tobacco products or semi-dry oral smokeless low tobacco snuff products have a moisture content between 10 wt% and 40 wt%.

The oral smokeless non-tobacco products or oral smokeless low tobacco snuff product may be flavourized by mixing the flavour with the oral smokeless non-tobacco product components or the oral smokeless snuff product components during manufacturing. Additionally or alternatively, the flavour may be added to the oral smokeless non-tobacco product or oral smokeless snuff product after it has been manufactured.

Pouched smokeless tobacco products may be produced by measuring portions of the smokeless tobacco composition and inserting the portions into a nonwoven tube.

US 4,703,765 discloses a device for packaging precise amounts of finely divided tobacco products, such as snuff tobacco or the like, in a tubular packaging material into which snuff portions are injected via a fill tube. Downstream from the tube, welding means are positioned for transverse sealing of the packaging material, and also cutting means for severing the packaging material in the area of the transverse seal to thus form discrete or individual portion packages.

Pouched smokeless tobacco products may alternatively be produced by placing portions of moist snuff on a nonwoven web using a pouch packer machine in accordance with the device disclosed in US 6,135,120.

The individual portions are sealed and cut apart thereby forming rectangular "pillow shaped" (or any other desired form) pouched products. Generally, each final pouched product includes parallel transverse seals at opposite ends and a longitudinal seal orthogonal to the transverse seals. The seals must be of sufficient strength to preserve the integrity of the pouched product during use while not disturbing the consumer's experience.

Oral pouched smokeless tobacco products are normally sized and configured to fit comfortably and discreetly in a user's mouth between the upper and lower gum and the lip.

For a packaging material for an oral pouched snuff product, there is typically a trade-off between strength and comfort when placed in the buccal cavity of the user. The packaging material forms the outside of the pouched product and is hence in contact with the buccal cavity, typically between the teeth and gum. The strength of the packaging material should desirably be high enough to handle the packaging material during manufacturing of the packaging material itself, during manufacturing of the pouched product and for the pouched product in use in the buccal cavity. Thereby, it is important that the seals of the pouched product are strong enough. Yet the packaging material should desirably be flexible enough to be comfortable when the oral pouched snuff product is placed in the buccal cavity of the user. Commonly used packaging material may often suffer from having a seal strength of the pouched product being less than desirable, especially when exposed to aggressive flavours comprised in the smokeless tobacco composition or non-tobacco composition enclosed by the packaging material in the pouched product.

If manufacturing an oral pouched nicotine product, wherein the saliva-permeable pouch encloses a filling material comprising a particulate non-tobacco material and a nicotine source, the requirements on the packaging material is higher in order to avoid leakage than it would be for an oral pouched snuff product with a filling material comprising tobacco, since the individual elements, e.g. particles, of the filling material are smaller and thus more easily could go through the packaging material, i.e. could leak.

Leakage, if any, can cause problems in various way. Leakage during manufacturing of the product may lead to that the quality of the seals go down, thus decreasing the seal strength, since particles of the filling material end up in the seal. Further, there may be a build-up of remnants in the production machine. These may fall down back on the manufacturing line, e.g. ending up on the outside of the products or in the seals. In addition, the remnants are negative for the working environment, since they e.g. may spread in the air.

In addition, leakage may occur during later handling of the products, when they have been placed in the containers, also called cans. For example, the containers may be shaken during transport and when carried by the user. There is then a risk that filling material may leak out from the pouches into the can.

The object of the present invention is to overcome or at least mitigate some of the problems associated with the prior art.

### DEFINITIONS

By "tobacco" is meant any part, e.g. leaves, stems, and stalks, of any member of the genus *Nicotiana.* The tobacco may be whole, shredded, threshed, cut, ground, cured, aged, fermented, or treated in any other way, e.g. granulated or encapsulated.

The term "tobacco snuff composition" is used herein for a finely divided tobacco material such as a ground tobacco material or cut tobacco. In addition to the tobacco material, the tobacco snuff composition may further comprise at least one of the following: water, salt (e.g. sodium chloride, potassium chloride, magnesium chloride, and any combinations thereof), pH adjuster, flavouring agent, cooling agent, heating agent, sweetening agent, colorant, humectant (e.g. propylene glycol or glycerol), antioxidant, preservative (e.g. potassium sorbate), binder, disintegration aid. In an example, the smokeless snuff composition comprises or consists of finely divided tobacco material, salt such as sodium chloride, and a pH adjuster. The tobacco snuff composition may be dry or moist. The tobacco snuff composition may be used between the teeth and gum.

A "non-tobacco composition" is a composition which does not contain any tobacco material, and which may be used in a similar way or in the same way as a tobacco snuff composition. Instead of tobacco, the non-tobacco composition may contain non-tobacco plant fibres and/or a filling material. Also processed fibres such as Microcrystalline Cellulose fibres may be used. The filling material may be present in the form of particles. For instance, the filling material may be a particulate filling material such as particles of microcrystalline cellulose. The non-tobacco composition may contain nicotine, i.e. it may be a nicotine-containing non-tobacco composition. Alternatively, the non-tobacco composition may contain no nicotine or substantially no nicotine, i.e. it may be a nicotine-free non-tobacco composition. As used herein, the expression "substantially no nicotine" intends an amount of nicotine of 1 percent by weight or less based on the total dry weight of the composition.

"Oral" and "oral use" is in all contexts used herein as a description for use in the oral cavity, such as buccal placement. The product is then intended for placement within the oral cavity, such as between the gum and the upper or lower lip, such that the product as a whole is contained in the oral cavity. The product is not intended to be swallowed.

As used herein "pouched product" or "oral pouched product" refers to a portion of smokeless tobacco composition or non-tobacco composition packed in a saliva-permeable pouch material intended for oral use, such as by buccal placement in the oral cavity. The oral pouched product may alternatively be referred to as a portion-packed (pouched) product for oral use. The term "portion" then refers to an amount of the smokeless tobacco composition or non-tobacco composition being appropriate for a portion-packed product.

As used herein, the term "moisture content" refers to the total amount of oven volatile ingredients, such as water and other oven volatiles (e.g. propylene glycol) in the preparation, composition or product referred to. The moisture content is given herein as percent by weight (wt%) of the total weight of the preparation, composition or product referred to. Some fibrous materials may exhibit hygroscopic properties. Hygroscopic materials maintain equilibrium moisture content depending on the ambient moisture and temperature. The moisture content as referred to herein may be determined by using a method based on literature references Federal Register/ vol.74, no. 4/712-719/ Wednesday, January 7, 2009/Notices "Total moisture determination" and AOAC (Association of Official Analytical Chemics), Official Methods of Analysis 966.02: "Moisture in Tobacco" (1990), Fifth Edition, K. Helrich (ed). In this method, the moisture content is determined gravimetrically by taking 2.5±0.25 g sample and weighing the sample at ambient conditions, herein defined as being at a temperature of 22 °C and a relative humidity (RH) of 60%, before evaporation of moisture and after completion of dehydration. Mettler Toledo's Moisture Analyzer HB43, a balance with halogen heating technology, is used (instead of an oven and a balance as in the mentioned literature references) in the experiments described herein. The sample is heated to 105°C (instead of 99.5±0.5°C as in the mentioned literature references). The measurement is stopped when the weight change is less than 1 mg during a 90 seconds time frame. The moisture content as weight percent of the sample is then calculated automatically by the Moisture Analyzer HB43.

"Flavour" or "flavouring agent" is used herein for a substance used to influence the aroma and/or taste of the nicotine product, including, but not limited to, essential oils, single flavour compounds, compounded flavourings, and extracts.

As used herein "% w/w", "w/w %", "wt%", "weight %" or "% by weight" refers to the weight percent of the ingredient referred to of the total weight of the preparation, composition or product referred to.

As used herein, reference to "dry weight percent", "% by weight, based on dry weight" and the like refers to the weight percent of the ingredient referred to on the basis of the total weight of the dry ingredients, i.e. all ingredients of the preparation, composition or product referred to excluding the moisture content.

As used herein, reference to "wet weight percent", "% by weight, based on wet weight" and the like refers to the weight percent of the ingredient referred to on the basis of the total weight of the ingredients, i.e. all ingredients of the preparation, composition or product referred to including the moisture content. Thus, "% by weight, based on total weight" as used herein is the same as "% by weight, based on wet weight".

As used herein the terms "pouched nicotine product for oral use" or "oral pouched nicotine product" refer to a portion of nicotine-containing filling material packed in a saliva-permeable pouch material intended for oral use. Two examples of oral pouched nicotine products are oral pouched nicotine non-tobacco products and oral pouched low tobacco nicotine products.

As used herein the terms "oral pouched nicotine non-tobacco product" , "oral pouched tobacco free nicotine product" or "oral pouched nicotine product free from tobacco" refer to a portion of nicotine-containing filling material packed in a saliva-permeable pouch material intended for oral use wherein no tobacco is included in said product.

As used herein the term "oral pouched low tobacco nicotine product" refers to a portion of nicotine-containing filling material packed in a saliva-permeable pouch material intended for oral use wherein an amount of tobacco material within the range of from about 0.1% to about 10% by weight or from about 0.1% to about 5% by weight, based on the total weight of the filling material, is included in said product.

As used herein, the term "non-particulate" refers to a component which is not in particulate form. For instance, the flavouring agent described herein may be a non-particulate flavouring agent such as a liquid, an oil or a mixture thereof.

As used herein, the term "particulate non-tobacco material" refers to a non-tobacco material comprising particles. The particles may have an average particle size within the range of from 50 to 500 µm.

Exemplary microcrystalline celluloses are described in EP1803443 A2 as being highly crystalline particulate cellulose containing crystallite aggregates obtained by removing amorphous (fibrous cellulose) regions of a purified cellulose source material by hydrolytic degradation, typically with a strong mineral acid such as hydrogen chloride. The acid hydrolysis process produces a microcrystalline cellulose of predominantly coarse particulate aggregate, typically having a mean size range of about 15 to 250 µm. Such microcrystalline celluloses are suitable to be used as a filling material in the product described herein.

### SUMMARY

The object of the present disclosure is to overcome or ameliorate at least one of the disadvantages of the prior art, or to provide a useful alternative.

The object above may be achieved by the subject-matter of claim 1 and/or claim 17. Embodiments are set forth in the appended dependent claims and in the description.

The present invention relates to a packaging material for use in an oral pouched nicotine product in order to enclose a filling material. The filling material comprises a particulate non-tobacco material and a nicotine source. The packaging material is a saliva-permeable nonwoven material comprising carded fibres. 50%-100% of the carded fibres are cellulose-based staple fibres, and 0%-50% of the carded fibres are thermoplastic fibres, with % numbers being based on the total weight of carded fibres at 21°C and 50% RH. The packaging material further comprises a binder, the binder constituting 20%-60% of a total weight of the packaging material. The cellulose-based staple fibres have a linear density ≤ 1.3 decitex, and the packaging material has a basis weight above 30 g/m².

By utilizing a packing material as described herein, it is possible to manufacture an oral pouched snuff product, e.g. an oral pouched nicotine product, having appropriate strength both for the material and the seals and which yet is flexible enough to be comfortable when the oral pouched snuff product is placed in the buccal cavity of the user.

By utilizing the packaging material according to the invention, it is possible to make sufficiently strong seals, also for seals being made with ultrasonic sealing, which typically are much narrower than seals made with heat-sealing. The seal strength is further high enough to also be sufficiently strong if the product comprises one or more aggressive flavours.

Commonly used packaging materials may often suffer from having a seal strength of the pouched product being less than desirable. Some flavours, comprised in the smokeless tobacco composition or non-tobacco composition material, i.e. the filling material, enclosed by the packaging material in the pouched product, are known to be able to have a potentially negative impact on the seal strength, especially over time, for pouched snuff products made with known technology, which may lead to seal rupture upon storage of the products. In particular, impaired seal strength is a problem for moist oral pouched products. The strength of the packaging material as described herein and the strength of the seals may be adapted to resist such flavours better than commonly used packaging materials for oral pouched snuff products.

In addition, the leakage of the filling material through the packaging material is held at an acceptable level for packaging materials and products according to the invention.

The binder may be of the commonly used types for packaging materials for oral pouched snuff products. The binder may e.g. be classified as an emulsion of one or several vinyl polymers/co-polymers formed by polymerization of any of the following monomers, e.g. vinyl acetate, ethylene/vinyl acetate copolymer, acrylic acid, methyl acrylate, butyl acrylate, ethylene/vinyl acetate copolymer, ethylacrylate. Such binders are known to the skilled person, e.g. from chapter 10 of the textbook "Introduction to Nonwovens Technology", Subhash K. Batra, Behnam Pourdeyhimi, 2012, ISBN No 978-1-60595-037-2.

Of all the fibres of the packaging material, the cellulose-based fibres preferably may make up 55%-99% of the fibre weight, preferably 58%-95%, more preferably 65%-85%, most preferably 70%-80%. The weights are defined at 21°C and 50% RH. It is also feasible to only use cellulose-based fibres, i.e. to completely dispense with the thermoplastic fibres.

Of all the fibres of the packaging material, the thermoplastic fibres may make up 1%-45% of the fibre weight, preferably 5%-42%, more preferably 15%-35%, most preferably 20%-30%. The weights are defined at 21°C and 50% RH. It is also feasible to completely dispense with the thermoplastic fibres.

The carded fibres may consist of the cellulose-based staple fibres and the thermoplastic fibres. It would also be feasible to add further fibres.

The packaging material may consist of the cellulose-based staple fibres, the thermoplastic fibres and the binder.

The basis weight of the packaging material, also known as the grammage, may be ≥ 32 g/m², more preferably ≥ 34 g/m², most preferably ≥ 36 g/m². An upper limit for the basis weight of the packaging material may be 45 g/m², 42 g/m² or 40 g/m².

The cellulose-based fibres may be natural cellulose fibres or a man-made cellulose-based fibres, e.g. regenerated cellulose fibres, such as rayon, lyocell or viscose. Tencel is a brand name for lyocell.

The cellulose-based fibres are known to be soft, relatively inelastic and/or moisture absorbent. Thereby the packaging material may be given desired mechanical properties, such that the packaging material is easy to handle during manufacturing of the packaging material itself and/or during manufacturing of the oral pouched snuff product and yet comfortable when the oral pouched snuff product is placed in the buccal cavity of the user. Further, these fibres are hydrophilic, which is advantageous when used for an oral pouched snuff product.

Man-made fibres are fibres whose chemical composition, structure, and properties are significantly modified during the manufacturing process. They are made of polymers. Man-made fibres are to be distinguished from natural fibres. Natural fibres also consist of polymers but they emerge from the manufacturing process in a relatively unaltered state. Some man-made fibres are derived from naturally occurring polymers, e.g. rayon, lyocell or viscose, which are derived from cellulose fibres. However, the cellulose is acquired in a radically altered state as compared to the raw material source, e.g. wood, and is further modified in order to be regenerated into man-made cellulose-based fibres. Such fibres, e.g. the rayon, lyocell or viscose, are known as regenerated cellulose fibres.

Another group of man-made fibres, which is much larger, is synthetic fibres. Synthetic fibres are made of polymers that do not occur naturally but instead are produced entirely in e.g. a chemical plant or laboratory.

The cellulose-based staple fibres may more preferably have a linear density ≤ 1.1 decitex, most preferably ≤ 0.9 decitex.

The cellulose-based staple fibres may have a length within the range of 30-80 mm, preferably within the range of 38-60 mm. Commonly used lengths are 38, 40, 60 and 80 mm.

The thermoplastic fibres may be one or more of PP, PLA, PET, PP/PE, PLA/co-PLA, wherein PP denotes polypropylene, PLA denotes polylactic acid, PET denotes polyethylene terephthalate and PE denotes polyethene. PP/PE is a bicomponent fibre, e.g. a sheath/core bi-component fibres with PP in the core and PE in the sheath. PLA/coPLA is a bicomponent fibre, e.g. a sheath/core bi-component fibres with PLA in the core and coPLA in the sheath

The thermoplastic fibres may have a length within the range of 30-80 mm, preferably within the range of 38-60 mm. Commonly used lengths are 38, 40, 60 and 80 mm. The thermoplastic fibres may have the same or a different length as compared to the cellulose-based fibres. When two or more thermoplastic fibres are used, they may have the same or different lengths.

The thermoplastic fibres may have a linear density ≤ 4.4 decitex, preferably ≤ 2.2 decitex, more preferably ≤ 1.7 decitex, most preferably ≤ 1.3 decitex.

The thermoplastic fibres may have a melting point within the range of 110-260°C, preferably within the range of 130-170°C, preferably within the range of 140-165°C. Hence, these fibres will at least partially melt, preferably substantially melt, in the seal, thus contributing to a sufficient seal strength.

The binder may preferably constitute 25%-55% of a total weight of the packaging material, more preferably 30%-50% of a total weight of the packaging material, most preferably 35%-45% of a total weight of the packaging material.

The packaging material may have a dry seal strength of at least 0.2 N/mm, preferably at least 0.25 N/mm, more preferably at least 0.3 N/mm, most preferably at least 0.35 N/mm, assuming the seal being made by ultrasonic welding. These levels have been found to deliver sufficient seal strength for the product. The dry seal strength values may be determined with the CORESTA method for seal strength, as disclosed in further detail elsewhere herein.

The packaging material may have an air permeability ≤ 4000 l/m²/s, preferably ≤ 3500 l/m²/s, more preferably ≤ 3000 l/m²/s, when measured according to the test method WSP070.1.R3(12) specified by EDANA, i.e. the European Disposables and Nonwovens Association. The air permeability is associated with the porosity of the packaging material and hence also associated with its tendency to leak filling material.

The packaging material may have a median pore size ≤ 300 µm², preferably ≤ 250 µm², more preferably ≤ 200 µm², most preferably ≤ 150 µm². The mean pore size of the packaging material is associated with its tendency to leak filling material.

The packaging material may have a powder leakage ≤ 400 mg, preferably ≤ 200 mg, more preferably ≤ 100 mg, most preferably ≤ 50 mg or even ≤ 20 mg, as measured with the method for leakage of powder through the packaging material as described herein. The present invention also relates to an oral pouched nicotine product, the product comprising a portion of filling material and a saliva-permeable pouch. The filling material comprises a particulate non-tobacco material and a nicotine source. Hence the filling material is of the type mentioned herein. The pouch encloses the portion of the filling material. The pouch comprises or consists of a packaging material as defined herein, wherein the packaging material is sealed with at least one seal to enclose the portion.

Thereby it is ascertained that the seal has an appropriate seal strength for a product to be used in the buccal cavity. The advantages described above for the packaging material are applicable for the oral pouched nicotine product as well.

There are two main ways of sealing the packaging material: heat-sealing and ultrasonic welding, but the packaging material as described herein is advantageous for both. A suitable method and apparatus for ultrasonic welding is disclosed in WO 2017/093486 A1 relating to a sealing device for sealing a packaging material enclosing a portion of a smokeless tobacco composition or non-tobacco composition to provide portion-packed oral pouched snuff products. The document further relates to an arrangement for manufacturing of portion-packed oral pouched snuff products, which arrangement comprises such a sealing device. The document also relates to a method for portion-packing of an oral pouched snuff product.

The thermoplastic fibres may be at least partially melted, preferably substantially melted, in the seal.

When tested as a product with the method as described herein, the oral pouched nicotine product may have a powder leakage ≤ 100 mg, preferably ≤ 50 mg, more preferably ≤ 25 mg, most preferably ≤ 10 mg or ≤ 2 mg as measured with the method for leakage of powder from product as described herein.

### METHODS

### Seal strength - general

Seal strength may be tested either in a dry state or a wet state of the sample. The samples may be taken from a production machine making oral pouched snuff products. Such products usually have one longitudinal seal, forming a tubular structure, and a transverse seal at either end of the product. Alternatively, the seals may be prepared in lab-scale. In that case, a strip of the material is folded and welded to itself, in the way described in EP 3 192 380 A1, paragraph [0136].

The seal strengths are then measured with the method described in EP 3 192 380 A1, paragraph [0137] or with the CORESTA method for seal strength described herein. For both methods, the first transverse seal made for the pouched product, i.e. the seal initially subjected to the smokeless tobacco composition or non-tobacco composition is measured.

### Seal strength - CORESTA method

CORESTA is an abbreviation for Cooperation Centre for Scientific Research Relative to Tobacco. The CORESTA method for seal strength comprises:
1. Remove all material from the pouch and cut a sample to 10 mm ± 1 mm for the longitudinal seal sample and as close to the edges as possible for the transverse seal sample. Record widths on form for each transverse seal sample prepared as pouch format may vary. Prepared sample width shall be consistent. The first transverse seal made for the pouch, i.e. the seal initially subject to the smokeless tobacco composition or non-tobacco composition is the one to be measured.
2. Condition samples at 22°C ± 1°C and 60% ± 3%RH for 24 hours prior to testing (not necessary for wet measurements).
3. Jaw separation to be set at 15 mm ± 0.1 mm. Record separation on form.
4. Pull speed to be set at 20 mm/min and record speed on form.
5. Use a recommended pre-load of 0.1 N whenever possible.
6. Measure the average load if possible for transverse seal values (if not record the max load) and the maximum load for longitudinal seals. Record values on form.
7. For wet measurements: Dip sample in demineralized water for 60 minutes prior to testing the transverse or longitudinal seals. Record values on form.

### Air permeability

Air permeability is measured according to the test method WSP070.1.R3(12) specified by EDANA, i.e. the European Disposables and Nonwovens Association.

### Pore area

The pore area of the packaging material is measured using a Microscope Zeiss Stemi 2000-C, AxioCam ERc5s with associated software Zen Core. A regular black and white image is taken of the nonwoven (3cmx3cm) using x1.6. In the Zen Core software an image analysis is done using automatic measurement and an in-house pore area method. In the pore area method, a coloured segmentation is done in the RGB histogram (0-255) to detect the voids of the fibres. The red threshold is set to 0-99, the green to 0-107 and the blue to 0-136 to avoid oversaturation. The area of voids is calculated as well as the radius of each void. The pore area can then be calculated using standard formulas.

### Leakage of powder through packaging material

The leakage of a powder through the packaging material is evaluated by sieving. The packaging material is cut as a sheet having a size of 346 cm² and is fixed between two sieving screens. The aperture of the screens is large enough to enable the powder to pass the screens, 2 mm and 1.5 mm, respectively. The sieving screens are connected to a bottom plate. 40 g of powder is added to the top screen. The sieve stack is connected to a lid and sieved at 5 minutes and 238 rpm using a Retch horizontal sieve shaker AS 400 control. The bottom plate is thereafter weighed giving the amount of ZYN powder sieved through the packaging material. The powder is the filling material used for the commercially available product "ZYN Citrus Mini dry", sold by Swedish Match. The ingredients are: fillers (E965, E460, E414), acidity regulators (E 500), stabilizers (E 463), nicotine bitartrate, flavourings, sweeteners (E 950). Accordingly the powder is a filling material, which is used for the product "ZYN Citrus Mini dry". The powder thus comprises i.a. a particulate non-tobacco material and a nicotine source.

### Leakage of powder from product

The leakage of powder from product is measured for portion-packed snuff products comprising a portion of a filling material and saliva-permeable pouch made of the packaging material described herein. The weight of the product is about 400 mg. The leakage is evaluated by tumbling. The filling material of the tested products is the same as in the above-mentioned product "ZYN Citrus Mini dry", sold by Swedish Match. A can containing 17 products are placed onto a sieving screen. The sieving screen is connected to a lid and a bottom plate. The can is then tumbled at 2 minutes at 300 rpm using a Retch horizontal sieve shaker AS 400 control. After tumbling the products are gently removed from the can with a pair of tweezers and the can with the powder is weighed. The empty can weight is subtracted, giving the powder weight. Three repetitive cans are done for each material evaluated.

### BRIEF DESCRIPTION OF THE DRAWINGS

The present invention will hereinafter be further explained by means of non-limiting examples with reference to the appended figures wherein:
- Fig. 1: shows a packaging material according to the invention with 0% PP,
- Fig. 2: shows a packaging material according to the invention with 15% of the total weight of the packaging material being polypropylene,
- Fig. 3: shows a packaging material according to the invention with 25% of the total weight of the packaging material being polypropylene, and
- Fig. 4: shows a reference packaging material.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

In order to characterize the packaging materials according to the invention, a number of measurements have been made comparing packaging materials according to the invention with a commonly used packaging material for oral pouched snuff products, denoted Reference. The Reference material comprises a binder, but no thermoplastic fibres. The Reference material is a packaging material commonly used for commercial snuff products. 100% of the fibres are viscose fibres having a linear density of 1.7 decitex. It has a basis weight of 29 g/m². The sample also comprises 40 wt% binder. This sample is denoted Reference in the tables below.

Measurements have also been made for oral pouched nicotine products according to the invention comprising the tested packaging materials. The oral pouched nicotine products comprise a portion of a filling material and a saliva-permeable pouch, which encloses the portion and comprises or consists of the packaging material as described herein. The filling material comprises a particulate non-tobacco material and a nicotine source and was the same for all products tested. The filling material was the one used for the commercially available product "ZYN Citrus Mini dry", sold by Swedish Match. The ingredients are: fillers (E965, E460, E414), acidity regulators (E 500), stabilizers (E 463), nicotine bitartrate, flavourings, sweeteners (E 950).

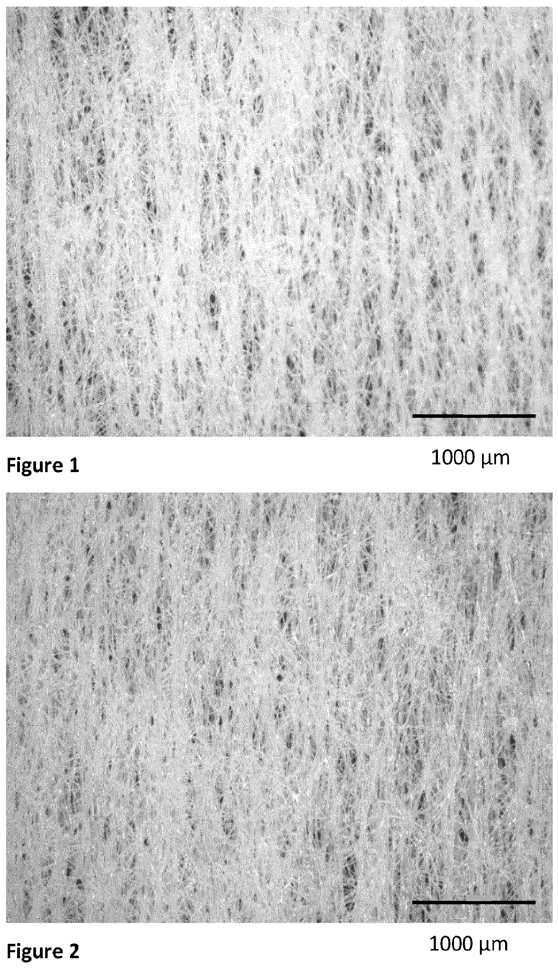

Figure 1 is a microscope photo of a first packaging material according to the invention. It has a basis weight of 38 g/m². 100% of the fibres are cellulose-based staple fibres, namely viscose fibres having a linear density of 0.9 decitex. This %-number as well as the other fibre %-numbers given herein are given as weight percentages. This sample is denoted 0% PP in the tables below. The sample also comprises 40 wt% binder with wt% being taken in relation to the total weight of the packaging material. The line at the lower right-hand corner of the photo is 1000 µm long. Hence the photo shows an area of about 4.5 mm x 3.4 mm. Corresponding lines of 1000 µm are seen in the other photos of Figures 2-4.

Figure 2 is a microscope photo of a second packaging material according to the invention. It has a basis weight of 38 g/m². 75 wt% of the fibres are cellulose-based staple fibres of the same type as in Figure 1 and 25 wt% are thermoplastic fibres, namely polypropylene, abbreviated PP, having a linear density of 1.7 decitex. The sample also comprises 40 wt% binder. Hence the viscose fibres make up 45% of the total weight and the thermoplastic fibres make up 15% of the total weight of the packaging material. This sample is denoted 15% PP in the tables below.

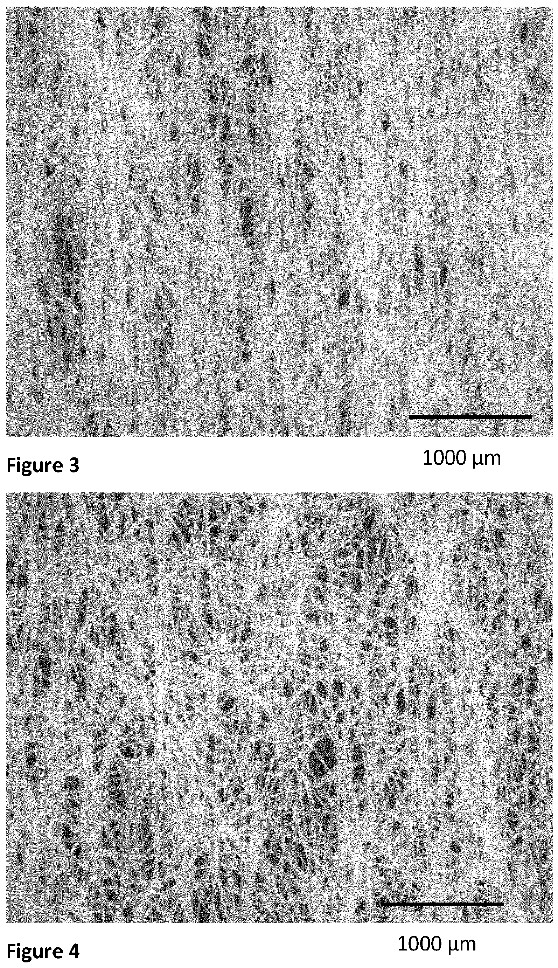

Figure 3 is a microscope photo of a third packaging material according to the invention. It has a basis weight of 38 g/m². 58% of the fibres are cellulose-based staple fibres of the same type as in Figures 1 and 2, 42% are thermoplastic fibres of the same type as in Figure 2. The sample also comprises 40 wt% binder. Hence the viscose fibres make up 35% of the total weight and the thermoplastic fibres make up 25% of the total weight of the packaging material. This sample is denoted 25% PP in the tables below.

Figure 4 is a microscope photo of the Reference material, which is described above.

As can be seen in the microscope photos, the packaging materials according to the invention are denser than the Reference material and have much smaller pores. Of the three packaging materials according to the invention shown in the photos, the third material seen in Figure 3 has the largest pores, which coincides with that it has the lowest percentage of the 0.9 denier viscose fibres and thus the highest percentage of the 1.7 denier PP fibres.

### Seal strength - lab seal

Seal strength was measured for the three different packaging materials according to the invention, shown in Figures 1-3, see Table 1 below, and compared to the Reference, shown in Figure 4, see the top line of Table 1. Samples were prepared in the way described in par. [0136] of EP 3 192 380 A1. The seal strengths were measured according to the CORESTA method described above. Measurements were performed for seals made with ultrasonic welding. Stdv in the tables below stands for standard deviation.

**Table 1**

| **Material** | **Seal strength (N/mm)** | **Stdv** |
|---|---|---|
| Reference | 0.16 | 0.03 |
| 0% PP | 0.30 | 0.04 |
| 15% PP | 0.35 | 0.03 |
| 25% PP | 0.44 | 0.04 |

The packaging materials according to the invention have a dry seal strength, assuming the seal being made by ultrasonic welding, of at least 0.2 N/mm, preferably at least 0.25 N/mm, more preferably at least 0.3 N/mm, most preferably at least 0.35 N/mm, which is much higher than for the Reference material. The highest value is obtained for the 25% PP sample, which has the highest percentage of thermoplastic fibres.

### Air permeability

Air permeability was measured for the same packaging materials, see method above and Table 2 below.

**Table 2**

| **Material** | **Air permeability (l/m²/s)** | **Stdv** |
|---|---|---|
| Reference | 4500 | 195 |
| 0% PP | 1828 | 63 |
| 15% PP | 2822 | 237 |
| 25% PP | 2800 | 89 |

The packaging materials according to the invention have an air permeability ≤ 4000 l/m²/s, preferably ≤ 3500 l/m²/s, more preferably ≤ 3000 l/m²/s, which is less than that of the Reference material. The sample with 0% PP has the lowest value, which coincide with that this sample has the fibres with the lowest linear density of the fibres.

### Pore Size

Pore size was measured for the same packaging materials, see method above and Table 3 below.

**Table 3**

| **Material** | **Median pore size (µm²)** | **Stdv** |
|---|---|---|
| Reference | 326 | 30.3 |
| 0% PP | 60 | 16.5 |
| 15% PP | 77 | 21.5 |
| 25% PP | 136 | 17.5 |

The packaging materials according to the invention have a median pore size ≤ 300 µm², preferably ≤ 250 µm², more preferably ≤ 200 µm², most preferably ≤ 150 µm², which is less than that of the Reference material. The sample with 0% PP has the lowest value, which coincide with that this sample has the fibres with the lowest mean value for linear density of the fibres.

### Leakage of powder through packaging material

The leakage of a powder through the packaging materials was evaluated by sieving, see method above and Table 4 below. The % numbers are in relation to the 40 g of powder used for the measurement. The last column show the values recalculated to weight.

**Table 4**

| **Material** | **Leakage (%)** | **Stdv** | **Leakage (mg)** |
|---|---|---|---|
| Reference | 10 | 3 | 4000 |
| 0% PP | 0.2 | 0 | 80 |
| 15% PP | 0.04 | 0 | 16 |
| 25% PP | 0.01 | 0 | 4 |

The packaging materials according to the invention have a much smaller leakage through the packaging material than for the Reference material. They have a powder leakage of ≤ 400 mg, preferably ≤ 200 mg, more preferably ≤ 100 mg, most preferably ≤ 50 mg or even ≤ 20 mg through the packaging material.

### Leakage of powder from pouches

The leakage of powder from pouches was evaluated by the method described above. The weight of the product is about 400 mg. Hence, there are about 365 mg of powder. See Table 5 below.

**Table 5**

| **Material** | **Leakage (mg)** | **Stdv** |
|---|---|---|
| Reference | 210 | 49 |
| 0% PP | 6 | 1 |
| 15% PP | 0 | 0 |
| 25% PP | 0 | 0 |

The packaging materials according to the invention have a powder leakage ≤ 100 mg, preferably ≤ 50 mg, more preferably ≤ 25 mg, most preferably ≤ 10 mg or ≤ 2 mg from the pouch according to the method described herein. The 0% PP samples, having the highest value, has a leakage of 6 mg, which is very much less than the leakage from pouches made with the Reference material.

For this parameter, it was also made a series of sample packaging materials according to the invention having a range of different basis weights: 30, 34 and 38 g/m². The weight of the product is about 400 mg. This was made for the material with 15% PP, with % PP as seen in relation to the total weight of the packaging material, i.e. with 40 wt% binder. See results in Table 6 below. All samples have a powder leakage being very much less than pouches made with the Reference material, even if it is seen that there is a higher leakage for the smallest basis weights 30 and 34 g/m² than for 38 g/m².

**Table 6**

| **Material** | **Leakage (mg)** | **Stdv (mg)** |
|---|---|---|
| 15% PP, 30 g/m² | 12 | 2 |
| 15% PP, 34 g/m² | 2 | 1 |
| 15% PP, 38 g/m² | 0 | 0 |

As an example of an oral pouched snuff product, an oral pouched nicotine product comprises a filling material and a saliva-permeable pouch of a packaging material enclosing the filling material, the filling material comprising:
- a particulate non-tobacco material,
- a nicotine source,
- water in an amount within the range of from 1 wt% to 45 wt% based on the total weight of the filling material, and
- a pH adjusting agent, e.g. comprising Na₂CO₃, K₂CO₃, NaHCO₃ and/or KHCO₃.

The oral pouched nicotine product may be free from tobacco, i.e. an oral pouched nicotine non-tobacco product.

Alternatively, the oral pouched nicotine product may comprise a low amount of tobacco material thereby providing an oral pouched low tobacco nicotine product. The amount of tobacco material of the oral pouched low tobacco nicotine product may be within the range of from about 0.1% to about 10% by weight such as from about 0.1% to about 5% by weight, such as from about 0.1 wt% to about 1 wt%, based on the total weight of the filling material. The presence of this small amount of tobacco will not impact the pH of the product to be substantially different from that exhibited by the oral pouched tobacco free products described herein.

The tobacco material may be provided in a form as described herein.

Further, the tobacco material may be a purified tobacco material, such as a bleached tobacco material or a tobacco extract.

The tobacco material described herein may comprise one, two or more particulate non-tobacco materials.

The amount of water of the filling material of the oral pouched nicotine product described herein may be present in an amount within the range of from about 0.5 wt% to about 12 wt% such as from about 0.5 wt% to about 5 wt%, such as about 3 wt%, based on the total weight of the filling material. When the amount of water is within the range of from about 0.5 wt % to about 12 wt% or from about 0.5 wt% to about 3 wt% as described herein, the oral pouched nicotine product may be considered dry, i.e. a dry oral pouched nicotine product.

Alternatively, the water content of the filling material of the oral pouched nicotine product described herein may be within the range of from about 20 wt% to about 50 wt%, such as from 20 wt% to 45 wt%, based on the total weight of the filling material. When the amount of water is within the range of from about 20 wt% to about 45 wt% as described herein the oral pouched nicotine product may be considered moist, i.e. a moist oral pouched nicotine product.

The filling material of the oral pouched nicotine product described herein may comprise particulate non-tobacco material within the range of from about 30 wt% to about 90 wt%, such as from about 30 wt% to about 85 wt%, such as from about 30 wt% to about 80 wt%, such as from about 60 wt% to about 90 wt%, based on the total weight of the filling material.

The particulate non-tobacco material may be water-insoluble, water-soluble or a combination thereof.

The particulate non-tobacco material may comprise or consist of a sugar alcohol such as maltitol, and/or of cellulose such as microcrystalline cellulose and/or powdered cellulose. For instance, the particulate non-tobacco material may comprise maltitol and/or microcrystalline cellulose.

Additionally or alternatively, the filling material of the oral pouched nicotine product described herein may comprise one or more water-insoluble fibres selected from the group consisting of maize fibres, oat fibres, tomato fibres, barley fibres, rye fibres, sugar beet fibres, buck wheat fibres, wheat fibres, pea fibres, potato fibres, apple fibres, cocoa fibres, bamboo fibres, citrus fibres, and any combination thereof. In an example, the water-insoluble fibres may form part of the non-tobacco particulate material.

The filling material may comprise one, two or more nicotine sources.

The filling material of the oral pouched nicotine product as described herein may comprise within the range of from about 1.0 % to about 10 % by weight of the nicotine source, based on the total weight of the filling material.

The nicotine source may be a nicotine salt and/or nicotine base. The nicotine source such as nicotine base may be bound to an ion exchange resin, such as polacrilex, e.g. via a salt bridge. Alternatively or additionally, the ion exchange resin may function as a solid support for the nicotine source such as nicotine base.

Nicotine base, such as in the form of an oily liquid, may be synthetically produced or extracted from tobacco.

The nicotine source may be a nicotine salt such as a nicotine salt selected from the group consisting of nicotine hydrochloride, nicotine dihydrochloride, nicotine monotartrate, nicotine bitartrate, nicotine bitartrate dihydrate, nicotine sulphate, nicotine zinc chloride monohydrate and nicotine salicylate, and any combination thereof.

In particular, the filling material may comprise nicotine bitartrate and/or nicotine bitartrate dihydrate.

The amount of nicotine source such as nicotine salt and/or nicotine base per pouched product may be within the range from about 0.1 mg to about 20 mg of nicotine calculated as nicotine base, such as about 0.5 mg, about 1.0 mg, about 1.5 mg, about 2.0 mg, about 2.5 mg, about 3.0 mg, about 3.5 mg, about 4.0 mg, about 4.5 mg, about 5.0 mg, about 6.0 mg, about 7.0 mg, about 8.0 mg, about 9.0 mg, about 10 mg, about 12 mg, about 14 mg, about 16 mg, about 18 mg, or about 20 mg of nicotine.

The nicotine salt of the filling material in the oral pouched nicotine product as disclosed herein may be a nicotine salt present in solid form and/or dissolved form.

The nicotine source as disclosed herein may be adsorbed or non-adsorbed onto the particulate non-tobacco material as disclosed herein. It will be appreciated that the expression "adsorbed onto" means that the nicotine source adheres to an outer surface of the non-tobacco particulate material. When the nicotine source is adsorbed onto the non-tobacco particulate material it adheres to the outer surface of said non-tobacco particulate material without substantially penetrating into any void(s) of said non-tobacco particulate material.

Alternatively or additionally, the nicotine source as disclosed herein may be absorbed into and/or adsorbed onto the tobacco material described herein.

The filling material of the oral pouched nicotine product described herein may further comprise a flavouring agent. The filling material may comprise one, two or more flavouring agents. For example the flavouring agent may be a non-encapsulated agent. Additionally or alternatively, the flavouring agent may be encapsulated. The non- encapsulated flavouring agent and the encapsulated flavouring agent may be the same or different. As used herein, an encapsulated flavouring agent is a flavouring agent contained within a capsule. Accordingly, a non-encapsulated flavouring agent is not contained within a capsule.

The flavouring agent of the filling material in the oral pouched nicotine product as disclosed herein may be a hydrophobic flavouring agent.

The flavouring agent of the filling material of the oral pouched nicotine product described herein may be an oil, a liquid, a lyophilized material, a spray-dried material, or a mixture thereof. In an example, the flavouring agent(s) is/are an oil and/or a liquid.

The filling material of the oral pouched nicotine product described herein may comprise within the range of from about 0.5 % to about 3 % by weight of the flavouring agent, based on the total weight of the filling material.

The filling material of the oral pouched nicotine product described may comprise a humectant such as polypropylene glycol.

In the oral pouched nicotine product as described herein, the particulate non-tobacco material, the nicotine source, the water, the pH adjusting agent, optionally the tobacco material, optionally the flavouring agent and optionally the humectant may be homogeneously mixed.

WO 2012/134380 discloses a pouch containing nicotine in free salt form, i.e. an oral pouched nicotine-containing non-tobacco snuff product. The product comprises a powder of at least one free nicotine salt, at least one pH adjusting agent and at least one filler, and a water insoluble pouch, wherein said pouch is permeable for saliva and therein dissolved parts of the powder. Such a powder is suitable to be used as a filling material in the product described herein.

The oral pouched nicotine product as disclosed herein is intended for use in the oral cavity, such as by buccal placement (e.g. by placing the pouched product between the upper or lower gum and the lip or cheek), and may therefore be referred to as portion-packed (pouched) product for oral use. The oral pouched nicotine product is sized and configured to fit comfortably and discreetly in a user's mouth between the upper or lower gum and the lip or cheek.

The oral pouched nicotine product as disclosed herein may have an oblong shape, such as a substantially rectangular shape (as seen from above when the product is placed on a planar surface). In such case, the longitudinal direction of the product corresponds to the length of the substantially rectangular product and the transverse direction of the product corresponds to the width of the substantially rectangular product.

The total weight of the oral pouched nicotine product (including filling material and packaging material) may be within the range of from about 0.3 to about 1.5 g.

The filling material of the oral pouched nicotine product described herein may be provided as a powder or granulate. Thus, the filling material enclosed by the saliva-permeable pouch of the packaging material may be provided in a non-compressed form.

The oral pouched (i.e. portion-packed) nicotine products may be positioned randomly in a container or in a pattern, for instance as described in WO 2012/069505. Alternatively or additionally, each oral pouched nicotine product may be placed in a sachet.

## Claims

1. A packaging material for use in an oral pouched nicotine product in order to enclose a filling material, said filling material comprising a particulate non-tobacco material and a nicotine source, said packaging material being a saliva-permeable nonwoven material comprising carded fibres,
50%-100% of said carded fibres being cellulose-based staple fibres, and
0%-50% of said carded fibres being thermoplastic fibres, with % numbers being based on total weight of carded fibres at 21°C and 50% RH,
said packaging material further comprising a binder, said binder constituting 20%-60% of a total weight of said packaging material,
said cellulose-based staple fibres having a linear density ≤ 1.3 decitex, and said packaging material having a basis weight above 30 g/m².

2. The packaging material according to claim 1, wherein 55%-99% of said carded fibres are cellulose-based staple fibres, preferably 58%-95%, more preferably 65%-85%, most preferably 70%-80%.

3. The packaging material according to claim 1 or 2, wherein 1%-45% of said carded fibres are thermoplastic fibres, preferably 5%-42%, more preferably 15%-35%, most preferably 20%-30%.

4. The packaging material according to any one of the preceding claims, wherein said carded fibres consist of said cellulose-based staple fibres and said thermoplastic fibres.

5. The packaging material according to any one of the preceding claims, wherein said packaging material consists of said cellulose-based staple fibres, said thermoplastic fibres and said binder.

6. The packaging material according to any one of the preceding claims, wherein said basis weight of said packaging material is ≥ 32 g/m², more preferably ≥ 34 g/m², most preferably ≥ 36 g/m².

7. The packaging material according to any one of the preceding claims, wherein said cellulose-based staple fibres are natural cellulose fibres or man-made cellulose-based fibres, e.g. regenerated cellulose fibres, such as rayon, lyocell or viscose.

8. The packaging material according to any one of the preceding claims, wherein said cellulose-based staple fibres have a linear density ≤ 1.1 decitex, most preferably ≤ 0.9 decitex.

9. The packaging material according to any one of the preceding claims, wherein said cellulose-based staple fibres have a length within the range of 30-80 mm, preferably within the range of 38-60 mm.

10. The packaging material according to any one of the preceding claims, wherein said thermoplastic fibres are one or more of PP, PLA, PET, PP/PE, PLA/co-PLA.

11. The packaging material according to any one of the preceding claims, wherein said thermoplastic fibres have a length within the range of 30-80 mm, preferably within the range of 38-60 mm.

12. The packaging material according to any one of the preceding claims, wherein said thermoplastic fibres has a linear density ≤ 4.4 decitex, preferably ≤ 2.2 decitex, more preferably ≤ 1.7 decitex, most preferably ≤ 1.3 decitex.

13. The packaging material according to any one of the preceding claims, wherein said thermoplastic fibres have a melting point within the range of 110-260°C, preferably within the range of 130-170°C, preferably within the range of 140-165°C.

14. The packaging material according to any one of the preceding claims, wherein said binder constitutes 25%-55% of a total weight of said packaging material, more preferably 30%-50% of a total weight of said packaging material, most preferably 35%-45% of a total weight of said packaging material.

15. The packaging material according to any one of the preceding claims, said packaging material having a dry seal strength of at least 0.2 N/mm, preferably at least 0.25 N/mm, more preferably at least 0.3 N/mm, most preferably at least 0.35 N/mm, assuming said seal being made by ultrasonic welding.

16. The packaging material according to any one of the preceding claims, said packaging material having an air permeability ≤ 4000 l/m²/s, preferably ≤ 3500 l/m²/s, more preferably ≤ 3000 l/m²/s.

17. An oral pouched nicotine product, said product comprising a portion of a filling material and a saliva-permeable pouch, said filling material comprising a particulate non-tobacco material and a nicotine source, said pouch enclosing said portion, said pouch comprising or consisting of a packaging material as defined in any one of the preceding claims, wherein said packaging material is sealed with at least one seal to enclose said portion.

18. The oral pouched nicotine product according to claim 17, wherein said thermoplastic fibres are at least partially melted, preferably substantially melted, in said seal.

## Patentansprüche

1. Verpackungsmaterial zur Verwendung in einem oralen Nikotinbeutelprodukt zum Einschließen eines Füllmaterials, wobei das Füllmaterial ein teilchenförmiges Nicht-Tabakmaterial und eine Nikotinquelle umfasst, wobei das Verpackungsmaterial ein speicheldurchlässiges Vliesmaterial ist, das kardierte Fasern umfasst,
50%-100% der kardierten Fasern Stapelfasern auf Zellulosebasis sind und
0%-50% der kardierten Fasern thermoplastische Fasern sind, wobei %-Angaben auf dem Gesamtgewicht kardierter Fasern bei 21°C und 50% RH basieren,
wobei das Verpackungsmaterial weiter ein Bindemittel umfasst, wobei das Bindemittel 20%-60% eines Gesamtgewichts des Verpackungsmaterials bildet,
wobei die Stapelfasern auf Zellulosebasis eine lineare Dichte von ≤ 1,3 Decitex aufweisen und das Verpackungsmaterial ein Basisgewicht über 30 g/m² aufweist.

2. Verpackungsmaterial nach Anspruch 1, wobei 55%-99% der kardierten Fasern Stapelfasern auf Zellulosebasis sind, bevorzugt 58%-95%, bevorzugter 65%-85%, besonders bevorzugt 70%-80%.

3. Verpackungsmaterial nach Anspruch 1 oder 2, wobei 1%-45% der kardierten Fasern thermoplastische Fasern sind, bevorzugt 5%-42%, bevorzugter 15%-35%, besonders bevorzugt 20%-30%.

4. Verpackungsmaterial nach einem der vorstehenden Ansprüche, wobei die kardierten Fasern aus den Stapelfasern auf Zellulosebasis und den thermoplastischen Fasern bestehen.

5. Verpackungsmaterial nach einem der vorstehenden Ansprüche, wobei das Verpackungsmaterial aus den Stapelfasern auf Zellulosebasis, den thermoplastischen Fasern und dem Bindemittel besteht.

6. Verpackungsmaterial nach einem der vorstehenden Ansprüche, wobei das Basisgewicht des Verpackungsmaterials ≥ 32 g/m², bevorzugter ≥ 34 g/m², besonders bevorzugt ≥ 36 g/m² ist.

7. Verpackungsmaterial nach einem der vorstehenden Ansprüche, wobei die Stapelfasern auf Zellulosebasis natürliche Zellulosefasern oder künstliche Fasern auf Zellulosebasis sind, zum Beispiel regenerierte Zellulosefasern, wie Rayon, Lyocell oder Viskose.

8. Verpackungsmaterial nach einem der vorstehenden Ansprüche, wobei die Stapelfasern auf Zellulosebasis eine lineare Dichte von ≤ 1,1 Decitex, besonders bevorzugt ≤ 0,9 Decitex aufweisen.

9. Verpackungsmaterial nach einem der vorstehenden Ansprüche, wobei die Stapelfasern auf Zellulosebasis eine Länge im Bereich von 30-80 mm, bevorzugt im Bereich von 38-60 mm aufweisen.

10. Verpackungsmaterial nach einem der vorstehenden Ansprüche, wobei die thermoplastischen Fasern eine oder mehrere von PP, PLA, PET, PP/PE, PLA/co-PLA sind.

11. Verpackungsmaterial nach einem der vorstehenden Ansprüche, wobei die thermoplastischen Fasern eine Länge im Bereich von 30-80 mm, bevorzugt im Bereich von 38-60 mm aufweisen.

12. Verpackungsmaterial nach einem der vorstehenden Ansprüche, wobei die thermoplastischen Fasern eine lineare Dichte von ≤ 4,4 Decitex, bevorzugt ≤ 2,2 Decitex, bevorzugter ≤ 1,7 Decitex, besonders bevorzugt ≤ 1,3 Decitex aufweisen.

13. Verpackungsmaterial nach einem der vorstehenden Ansprüche, wobei die thermoplastischen Fasern einen Schmelzpunkt im Bereich von 110-260 °C, bevorzugt im Bereich von 130-170 °C, bevorzugt im Bereich von 140-165 °C aufweisen.

14. Verpackungsmaterial nach einem der vorstehenden Ansprüche, wobei das Bindemittel 25%-55% eines Gesamtgewichts des Verpackungsmaterials bildet, bevorzugter 30%-50% eines Gesamtgewichts des Verpackungsmaterials, besonders bevorzugt 35%-45% eines Gesamtgewichts des Verpackungsmaterials.

15. Verpackungsmaterial nach einem der vorstehenden Ansprüche, wobei das Verpackungsmaterial eine Trockensiegelfähigkeit von mindestens 0,2 N/mm, bevorzugter mindestens 0,25 N/mm, bevorzugter mindestens 0,3 N/mm, besonders bevorzugt von mindestens 0,35 N/mm aufweist, unter der Annahme, dass die Versiegelung durch Ultraschallschweißen erfolgt.

16. Verpackungsmaterial nach einem der vorstehenden Ansprüche, wobei das Verpackungsmaterial eine Luftdurchlässigkeit ≤ 4000 l/m²/s, bevorzugt ≤ 3500 l/m²/s, bevorzugter ≤ 3000 l/m²/s aufweist.

17. Orales Nikotinbeutelprodukt, wobei das Produkt eine Portion eines Füllmaterials und einen speicheldurchlässigen Beutel umfasst, wobei das Füllmaterial ein teilchenförmiges Nicht-Tabakmaterial und eine Nikotinquelle umfasst, wobei der Beutel die Portion einschließt, wobei der Beutel ein Verpackungsmaterial nach einem der vorstehenden Ansprüche umfasst oder aus diesem besteht, wobei das Verpackungsmaterial mit mindestens einem Siegel versiegelt ist, um die Portion einzuschließen.

18. Orales Nikotinbeutelprodukt nach Anspruch 17, wobei die thermoplastischen Fasern in dem Siegel mindestens teilweise geschmolzen, bevorzugt im Wesentlichen geschmolzen sind.

## Revendications

1. Matériau d'emballage destiné à être utilisé pour un produit à base de nicotine en sachet destiné à être administré par voie orale afin d'enfermer un matériau de remplissage, ledit matériau de remplissage comprenant un matériau particulaire sans tabac et une source de nicotine, ledit matériau d'emballage étant un matériau non tissé perméable à la salive comprenant des fibres cardées,
de 50 % à 100 % desdites fibres cardées étant des fibres discontinues à base de cellulose, et
de 0 % à 50 % desdites fibres cardées étant des fibres thermoplastiques, avec les pourcentages étant basés sur le poids total de fibres cardées à 21 °C et 50 % d'humidité relative,
ledit matériau d'emballage comprenant en outre un liant, ledit liant constituant de 20 % à 60 % d'un poids total dudit matériau d'emballage,
lesdites fibres discontinues à base de cellulose présentant une densité linéaire ≤ 1,3 décitex, et ledit matériau d'emballage présentant un poids de base supérieur à 30 g/m².

2. Matériau d'emballage selon la revendication 1, dans lequel de 55 % à 99 % desdites fibres cardées sont des fibres discontinues à base de cellulose, de préférence de 58 % à 95 %, plus préférentiellement de 65 % à 85 %, le plus préférentiellement de 70 % à 80 %.

3. Matériau d'emballage selon la revendication 1 ou 2, dans lequel de 1 % à 45 % desdites fibres cardées sont des fibres thermoplastiques, de préférence de 5 % à 42 %, plus préférentiellement de 15 % à 35 %, le plus préférentiellement de 20 % à 30 %.

4. Matériau d'emballage selon l'une quelconque des revendications précédentes, dans lequel lesdites fibres cardées consistent en lesdites fibres discontinues à base de cellulose et lesdites fibres thermoplastiques.

5. Matériau d'emballage selon l'une quelconque des revendications précédentes, dans lequel ledit matériau d'emballage consiste en lesdites fibres discontinues à base de cellulose, lesdites fibres thermoplastiques et ledit liant.

6. Matériau d'emballage selon l'une quelconque des revendications précédentes, dans lequel ledit poids de base dudit matériau d'emballage est ≥ 32 g/m², plus préférentiellement ≥ 34 g/m², le plus préférentiellement ≥ 36 g/m².

7. Matériau d'emballage selon l'une quelconque des revendications précédentes, dans lequel lesdites fibres discontinues à base de cellulose sont des fibres de cellulose naturelles ou des fibres à base de cellulose artificielles, par exemple des fibres de cellulose régénérées, telles que la rayonne, le lyocell ou la viscose.

8. Matériau d'emballage selon l'une quelconque des revendications précédentes, dans lequel lesdites fibres discontinues à base de cellulose présentent une densité linéaire ≤ 1,1 décitex, le plus préférentiellement ≤ 0,9 décitex.

9. Matériau d'emballage selon l'une quelconque des revendications précédentes, dans lequel lesdites fibres discontinues à base de cellulose présentent une longueur dans la plage de 30 à 80 mm, de préférence dans la plage de 38 à 60 mm.

10. Matériau d'emballage selon l'une quelconque des revendications précédentes, dans lequel lesdites fibres thermoplastiques sont une ou plusieurs parmi PP, PLA, PET, PP/PE, PLA/co-PLA.

11. Matériau d'emballage selon l'une quelconque des revendications précédentes, dans lequel lesdites fibres thermoplastiques présentent une longueur dans la plage de 30 à 80 mm, de préférence dans la plage de 38 à 60 mm.

12. Matériau d'emballage selon l'une quelconque des revendications précédentes, dans lequel lesdites fibres thermoplastiques présentent une densité linéaire ≤ 4,4 décitex, de préférence ≤ 2,2 décitex, plus préférentiellement ≤ 1,7 décitex, le plus préférentiellement ≤ 1,3 décitex.

13. Matériau d'emballage selon l'une quelconque des revendications précédentes, dans lequel lesdites fibres thermoplastiques présentent un point de fusion dans la plage de 110 à 260 °C, de préférence dans la plage de 130 à 170 °C, de préférence dans la plage de 140 à 165 °C.

14. Matériau d'emballage selon l'une quelconque des revendications précédentes, dans lequel ledit liant constitue de 25 % à 55 % d'un poids total dudit matériau d'emballage, plus préférentiellement de 30 % à 50 % d'un poids total dudit matériau d'emballage, le plus préférentiellement de 35 % à 45 % d'un poids total dudit matériau d'emballage.

15. Matériau d'emballage selon l'une quelconque des revendications précédentes, ledit matériau d'emballage présentant une étanchéité à sec d'au moins 0,2 N/mm, de préférence d'au moins 0,25 N/mm, plus préférentiellement d'au moins 0,3 N/mm, le plus préférentiellement d'au moins 0,35 N/mm, en supposant que ledit joint est fait par soudage par ultrasons.

16. Matériau d'emballage selon l'une quelconque des revendications précédentes, ledit matériau d'emballage présentant une perméabilité à l'air ≤ 4 000 l/m²/s, de préférence ≤ 3 500 l/m²/s, plus préférentiellement ≤ 3 000 l/m²/s.

17. Produit à base de nicotine en sachet destiné à être administré par voie orale, ledit produit comprenant une partie d'un matériau de remplissage et un sachet perméable à la salive, ledit matériau de remplissage comprenant un matériau particulaire sans tabac et une source de nicotine, ledit sachet enfermant ladite partie, ledit sachet comprenant ou consistant en un matériau d'emballage tel que défini selon l'une quelconque des revendications précédentes, dans lequel ledit matériau d'emballage est fermé par au moins un joint pour enfermer ladite partie.

18. Produit à base de nicotine en sachet destiné à être administré par voie orale selon la revendication 17, dans lequel lesdites fibres thermoplastiques sont au moins partiellement fondues, de préférence sensiblement fondues, dans ledit joint.
